# EUROPEAN PATENT APPLICATION

(11) **EP 3 160 095 A1**
(43) Date of publication of application: **26.04.2017**
(21) Application number: 14895351.6
(22) Date of filing: 12.09.2014
(51) Int. Cl.: H04L 12/801

(54) **METHOD AND DEVICE FOR PROCESSING MPLS LOAD SHARING**

(30) Priority: 19.06.2014 CN 201410275503
(71) Applicant: ZTE Corporation, Shenzhen, Guangdong 518057 (CN)
(72) Inventor: LI, Shifa, Shenzhen Guangdong 518057 (CN); YE, Yong, Shenzhen Guangdong 518057 (CN); PAN, Qiang, Shenzhen Guangdong 518057 (CN)
(74) Representative: HGF Limited
(86) International application number: PCT/CN2014/086448
(87) International publication number: WO 2015/192496

(57) **Abstract**

A method and device for processing MPLS load sharing are disclosed in the present invention. The method includes: separating labels in the MPLS load sharing, and forming a label group and IP load sharing; herein, the label group includes labels corresponding to each link; when a link failure is detected, performing handover on a link based on the IP load sharing; and performing traffic forwarding based on the labels in the label group and the IP load sharing. With the present invention, the problem in the existing technology that the packet loss time is long when a routing failure occurs in the MPLS load sharing is solved, the service interruption time at the instant of link failure in the MPLS load sharing is shortened, and the service interruption time is independent on the number of routing prefixes. The more routing prefixes there are, the more obvious effect is.

## Description

### Technical Field

The present invention relates to the field of data network and communication technology, and in particular, to a method and device for processing Multiple Protocol Label Switching (MPLS) load sharing.

### Background

In the rapid network development era, the user's requirement for the bandwidth and quality of service is increasingly higher. Various technologies for improving the quality of network service emerge at the right moment, herein the Fast Rerouting (FRR) technology and the load sharing technology are most extensively applied. The fast rerouting technology is to protect that the service interruption is less than 50ms; and the load sharing technology is to improve the link bandwidth and redundancy protection.

There are two main MPLS load sharing modes: a packet-based mode and a stream-based mode. Both the two modes are required to map traffics to MPLS load sharing links. The packet-based mode is to evenly allocate messages to each load sharing link according to the weight of the MPLS load sharing link. The stream-based mode is to generate stream identifiers according to character words of the message, such as quintuple information of an Internet Protocol (IP) message and a label value of a label message and so on, and each stream identifier corresponds to one load sharing link.

When a failure occurs in the MPLS load sharing link, a forwarding plane needs to update load sharing link information, a control plane needs to complete routing computation through protocol convergence and regenerate load sharing. During the load sharing link failure and the completion of control plane convergence, traffics continue to be sent to the failed load sharing link, thus a phenomenon of packet loss appears, and if the time of packet loss is too long, MPLS services will be affected.

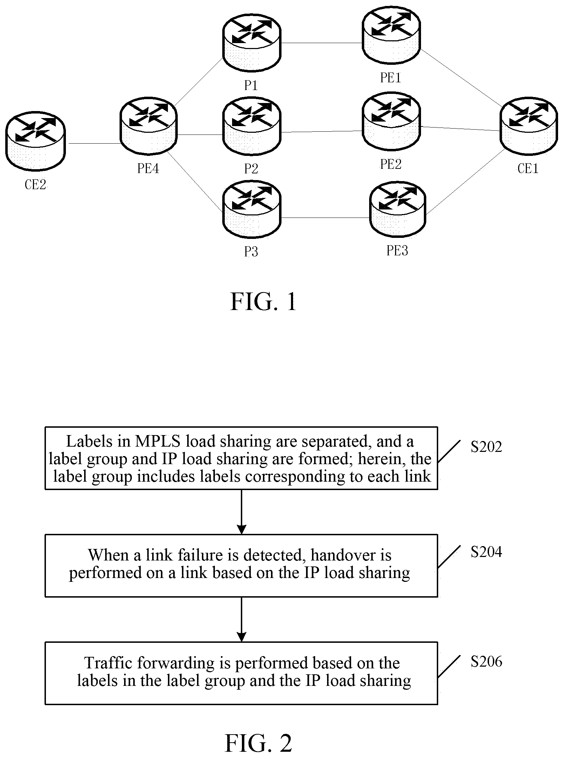

In a router device, the traditional implementation scheme is: each Virtual Private Network (VPN) route corresponds to one MPLS load sharing. FIG. 1 is a networking diagram of MPLS load sharing according to the existing technology, as shown in FIG. 1, when a large number of VPN routes exist in the router device, there are also multiple MPLS load sharing in the system. A common characteristic of the MPLS load sharing is that IP information of links is same and only labels are different. Once a certain link has a failure, the forwarding plane needs to update link information of all MPLS load sharing in the system, and updating link information of an MPLS load sharing table is a very time-consuming operation, which causes that the packet loss occurs in the services which cannot be updated by the MPLS load sharing in time. The packet loss time even reaches a second level which is unaccepted by voice services and the like.

### Summary of the Invention

The embodiments of the present invention provide a method and device for processing MPLS load sharing, to at least solve the problem in the existing technology that the time for packet loss is long when a routing failure occurs in the MPLS load sharing.

According to one aspect of the present invention, the present invention provides a method for processing Multiple Protocol Label Switching, MPLS, load sharing, herein, the method includes: separating labels in the MPLS load sharing, and forming a label group and Internet Protocol, IP, load sharing; herein, the label group includes labels corresponding to each link; when a link failure is detected, performing handover on a link based on the IP load sharing; and performing traffic forwarding based on the labels in the label group and the IP load sharing.

Alternatively, performing handover on a link based on the IP load sharing includes: when the link failure is detected, updating the IP load sharing; and performing the handover on the link according to updated IP load sharing.

Alternatively, performing traffic forwarding on the link based on the labels in the label group includes: searching a label corresponding to a new link after the handover in the label group; and performing the traffic forwarding according to the label and link information in the IP load sharing.

According to another aspect of the present invention, the present invention further provides a device for processing MPLS load sharing, herein, the device includes: a label separation module, arranged to separate labels in the MPLS load sharing and form a label group and IP load sharing; herein, the label group includes labels corresponding to each link; a link handover module, arranged to, when a link failure is detected, perform handover on a link based on the IP load sharing; and a traffic forwarding module, arranged to perform traffic forwarding based on the labels in the label group and the IP load sharing.

Alternatively, the link handover module includes: an update unit, arranged to, when the link failure is detected, update the IP load sharing; and a link handover unit, arranged to perform the handover on the link according to updated IP load sharing.

Alternatively, the traffic forwarding module includes: a label search unit, arranged to search a label corresponding to a new link after the handover in the label group; and a traffic forwarding unit, arranged to perform the traffic forwarding according to the label and link information in the IP load sharing.

The beneficial effects of the present invention are as follows:
through the present invention, the problem in the related art that the packet loss time is long when a routing failure occurs in the MPLS load sharing is solved, which shortens the service interruption time at the instant of link failure in the MPLS load sharing, and achieves that the service interruption time is independent of the number of routing prefixes. The more routing prefixes there are, the more obvious effect is.

The above description is only an overview of the technical scheme of the present invention, in order to understand the technical means of the present invention more clearly, it may be implemented in accordance with the contents of the specifications, and in order to make the abovementioned and other objects, characteristics and advantages of the present invention more evident and understandable, specific embodiments of the present invention will be especially illustrated below.

### Brief Description of Drawings

FIG. 1 is a networking diagram of MPLS load sharing according to the existing technology;
FIG. 2 is a flow chart of a method for processing MPLS load sharing according to an embodiment of the present invention;
FIG. 3 is a block diagram of a structure of a device for processing MPLS load sharing according to an embodiment of the present invention;
FIG. 4 is a schematic diagram of one link having a failure in MPLS load sharing according to an embodiment of the present invention; and
FIG. 5 is a schematic diagram of interaction of a label separation module in MPLS load sharing according to an embodiment of the present invention.

### Specific Embodiments

In order to solve the problem in the existing technology that the packet loss time is long when a routing failure occurs in the MPLS load sharing, the present invention provides a method and device for processing MPLS load sharing, and the present invention will be further described in detail in combination with the accompanying drawings and embodiments below. It should be understood that the specific embodiments described here are only used to explain the present but do not limit the present invention.

The object of the present invention is to achieve that the packet loss of the service flow is less than 50ms when a load sharing link has a failure in a scenario of deploying the MPLS load sharing. In order to achieve the object, it is required to separate label information in the MPLS load sharing to form a label group and IP load sharing, which ensures that the IP load sharing may be multiplexed to the greatest extent. When a failure occurs in the link, a forwarding plane only needs to update link information in the IP load sharing, thereby implementing a fast handover of link information in the MPLS load sharing. Introductions will be made through embodiments below.

The embodiment provides a method for processing MPLS load sharing, FIG. 2 is a flow chart of a method for processing MPLS load sharing according to an embodiment of the present invention, and the method includes the following steps (step S202-step S206) as shown in FIG. 2.

In step S202, labels in the MPLS load sharing are separated, and a label group and IP load sharing are formed; herein, the label group includes labels corresponding to each link.

In step S204, when a link failure is detected, handover is performed on a link based on the IP load sharing.

Specifically, performing handover on a link based on the IP load sharing includes: updating the IP load sharing when the link failure is detected; and performing the handover on the link according to the updated IP load sharing.

In step S206, traffic forwarding is performed based on the labels in the label group and the above IP load sharing.

Specifically, performing traffic forwarding on the link based on the labels in the label group includes: searching a label corresponding to a new link after the handover in the label group; and performing traffic forwarding according to the label and link information in the IP load sharing.

With the above method, the problem in the existing technology that the packet loss time is long when a routing failure occurs in the MPLS load sharing is solved, which shortens the service interruption time at the instant of link failure in the MPLS load sharing, and achieves that the service interruption time is independent on the number of routing prefixes. The more routing prefixes there are, the more obvious effect is.

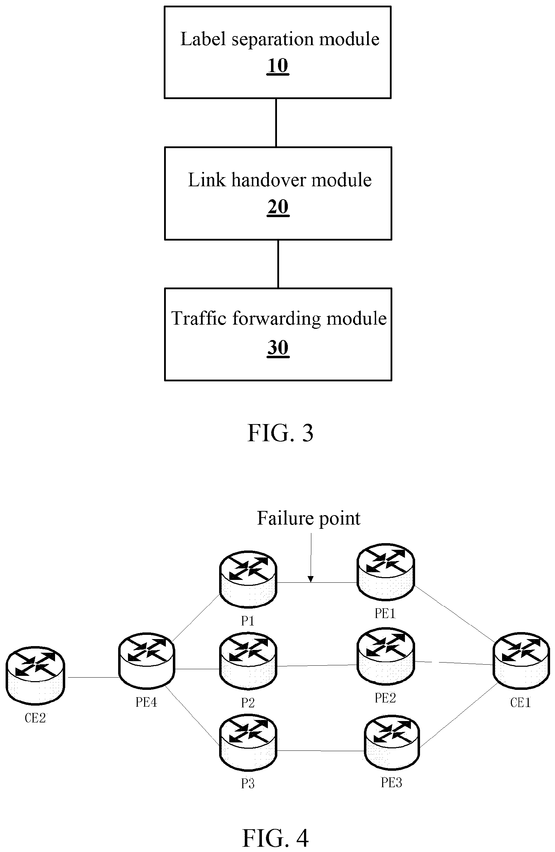

Corresponding to the method for processing MPLS load sharing introduced in the above embodiment, the embodiment provides a device for processing MPLS load sharing, and the device is used to implement the above embodiment. FIG. 3 is a block diagram of a structure of a device for processing MPLS load sharing according to an embodiment of the present invention, and the device includes: a label separation module 10, a link handover module 20 and a traffic forwarding module 30 as shown in FIG. 3. The structure will be introduced in detail below.

The label separation module 10 is arranged to separate labels in the MPLS load sharing and form a label group and IP load sharing; herein, the label group includes labels corresponding to each link;
the link handover module 20, connected to the label separation module 10, is arranged to, when a link failure is detected, perform handover on a link based on the IP load sharing; and
the traffic forwarding module 30, connected to the link handover module 20, is arranged to perform traffic conversion based on the labels in the label group and the IP load sharing.

Alternatively, the link handover module 20 includes: an update unit, arranged to when the link failure is detected, update the IP load sharing; and a link handover unit, arranged to perform the handover on the link according to the updated IP load sharing.

Alternatively, the traffic forwarding module 30 includes: a label search unit, arranged to search a label corresponding to a new link after the handover in the label group; and a traffic forwarding unit, arranged to perform traffic forwarding according to the label and link information in the IP load sharing.

The technical scheme of the present invention will be introduced through embodiments below.

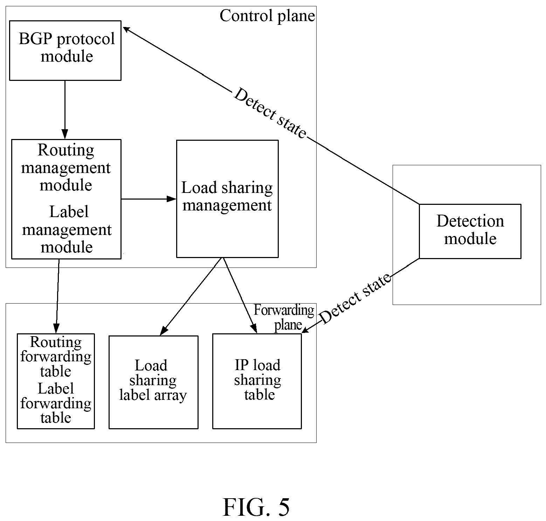

FIG. 4 is a schematic diagram of one link having a failure in MPLS load sharing according to an embodiment of the present invention, and as shown in FIG. 4, when a failure occurs in a link PE4-P1-PE1 (Path1), the packet loss of VPN traffics sent from a CE2 to a CE1 is less than 50ms. FIG. 5 is a schematic diagram of interaction of a label separation module in MPLS load sharing according to an embodiment of the present invention, the embodiment is implemented in a router PE4. The specific implementation steps are as follows.

In step 1, MP-IBGP neighbors to a PE1, PE2 and PE3 are configured in the PE4 in FIG. 1, 1000 routes (Prefix1-Prefix1000) are notified to the PE1, PE2 and PE3 by the CE1 through an IGP protocol. The 1000 routes are notified to the PE4 by the PE1, PE2 and PE3 respectively through an MP-IBGP protocol, thus the PE4 learns the 1000 routes (Prefix1-Prefix1000).

In step 2, load sharing of the MP-BGP is configured in the PE4 in FIG. 1, 1000 L3VPN routes (Prefix1-Prefix1000) form 1000 MPLS load sharing, all MPLS load sharing have three links: PE4-P1-PE1 (Path1), PE4-P2-PE2 (Path2) and PE4-P3-PE3 (Path3), and only labels corresponding to each route in the links are different. The subsequent steps will be described with a Prefix1 as an example, and it is assumed that labels corresponding to the Prefix1 in the links (Path1, Path2, Path3) are respectively (L11, L12, L13).

In step 3, a load sharing management module performs calculation to generate a label group LIndex1 (L11, L12, L13) and IP load sharing IpIndex1 (Path1(0), Path2(1), Path3(2)) in FIG. 5, herein the IP load sharing IpIndex1 may be multiplexed by other route (Prefix2-Prefix1000). Meanwhile, label locations 0-2 in the label group LIndex1 are respectively recorded in the Path1-Path3 of the IP load sharing IpIndex1.

In step 4, a routing management module sends the route Prefix1 carrying the label group index LIndex1 and the IP load sharing index IpIndex1 to a forwarding plane in FIG. 5.

In step 5, the load sharing management module sends the label group LIndex1 (L11, L12, L13) and the IP load sharing IpIndex1 (Pathl(0), Path2(1), Path3(2)) to the forwarding plane in FIG. 5.

In step 6, the forwarding plane looks up a VPN routing table through an IP address in the message in FIG. 5, and hits the route Prefix1 carrying the label group LIndex1 and the IP load sharing index Iplndex1. Then, one link (Path1(0)) in the IP load sharing IpIndex1 is hit through a load sharing routing algorithm, a label L11 corresponding to the Path2 is found from the label group LIndex1 (L11, L12, L13) according to label location information 0 recorded in the Path1(0).

In step 7, when a detection module discovers that the link Path1 has a failure, the forwarding plane directly updates the IP load sharing IpIndex1 (Path2(1), Path3(2)). Traffics of the route Prefix1 are hit, and the Path3(2) of the IP load sharing IpIndex1 is hit through the load sharing routing algorithm. A label L13 corresponding to the Path3 is found from the label group LIndex1 (L11, L12, L13) according to label location information recorded in the Path3(2).

In step 8, a control plane will form new MPLS load sharing after a BGP protocol is re-converged.

In conclusion, the service interruption time at the instant of link failure in the MPLS load sharing is greatly shortened in the embodiment, which achieves that the service interruption time is independent on the number of routing prefixes. The more routing prefixes there are, the more obvious effect is.

The flow of the technical scheme of the present invention is roughly described as follows.

In step A, a Border Gateway Protocol (BGP) is configured and a load sharing command is enabled.

In step B, routes learnt through the BGP protocol form the load sharing and are sent to a load sharing management module.

In step C, the load sharing management module perform calculations to generate a label group and IP load sharing, and records location information of a label in the corresponding label group in link information of the IP load sharing.

In step D, the IP load sharing must be multiplexed.

In step E, the label group and the IP load sharing are sent to a forwarding plane (that is, a chip is sent).

In step F, when the routes are sent to the forwarding plane, an index of the label group and an index of the IP load sharing are carried.

In step G, during the message forwarding, complete forwarding information is formed in combination with the IP load sharing and the label group.

In step H, when a routing failure occurs, the forwarding plane updates the IP load sharing, and performs handover on a link according to the updated IP load sharing.

In step I, a label corresponding to a new link to which handover is performed is searched in the label group, and traffic conversion is performed based on the label.

With the technical scheme of the present invention, the problem in the existing technology that the packet loss time is long when a routing failure occurs in the MPLS load sharing is solved, which shortens the service interruption time at the instant of link failure in the MPLS load sharing, and achieves that the service interruption time is independent on the number of routing prefixes. The more routing prefixes there are, the more obvious effect is.

Though the alternative embodiments of the present invention have been disclosed for the purpose of illustration, the people skilled in the art will realize that various improvements, additions and replacements are also possible, therefore, the scope of the present invention should not be limited to the above embodiments.

### Industrial Applicability

As mentioned above, a method and device for processing MPLS load sharing provided in the embodiments of the present invention have the following beneficial effects: the service interruption time at the instant of link failure in the MPLS load sharing is shortened, which achieves that the service interruption time is independent on the number of routing prefixes. If there are more routing prefixes, the effect thereof is more obvious.

## Claims

1. A method for processing Multiple Protocol Label Switching, MPLS, load sharing, comprising:
separating labels in the MPLS load sharing, and forming a label group and Internet Protocol, IP, load sharing; wherein, the label group includes labels corresponding to each link;
when a link failure is detected, performing handover on a link based on the IP load sharing; and
performing traffic forwarding based on the labels in the label group and the IP load sharing.

2. The method of claim 1, wherein, performing handover on a link based on the IP load sharing comprises:
when the link failure is detected, updating the IP load sharing; and
performing the handover on the link according to updated IP load sharing.

3. The method of claim 1, wherein, performing traffic forwarding based on the labels in the label group and the IP load sharing comprises:
searching a label corresponding to a new link after the handover in the label group; and
performing the traffic forwarding according to the label and link information in the IP load sharing.

4. A device for processing Multiple Protocol Label Switching MPLS load sharing, comprising:
a label separation module, arranged to separate labels in the MPLS load sharing and form a label group and Internet Protocol, IP, load sharing; wherein, the label group includes labels corresponding to each link;
a link handover module, arranged to, when a link failure is detected, perform handover on a link based on the IP load sharing; and
a traffic forwarding module, arranged to perform traffic forwarding based on the labels in the label group and the IP load sharing.

5. The device of claim 4, wherein, the link handover module comprises:
an update unit, arranged to, when the link failure is detected, update the IP load sharing; and
a link handover unit, arranged to perform the handover on the link according to updated IP load sharing.

6. The device of claim 4, wherein, the traffic forwarding module comprises:
a label search unit, arranged to search a label corresponding to a new link after the handover in the label group; and
a traffic forwarding unit, arranged to perform the traffic forwarding according to the label and link information in the IP load sharing.
